Europäisches Patentamt

European Patent Office

Office européen des brevets

(11) Publication number: **0 283 565 B1**

## EUROPEAN PATENT SPECIFICATION

(45) Date of publication of patent specification: **30.12.92**   (51) Int. Cl.⁵: **G09G 1/16**

(21) Application number: **87115759.0**

(22) Date of filing: **27.10.87**

(54) **Computer system with video subsystem.**

(30) Priority: **20.03.87 US 28801**

(43) Date of publication of application:
**28.09.88 Bulletin 88/39**

(45) Publication of the grant of the patent:
**30.12.92 Bulletin 92/53**

(84) Designated Contracting States:
**AT BE CH DE ES FR GB GR IT LI LU NL SE**

(56) References cited:
**EP-A- 0 241 288**
**US-A- 4 511 965**
**US-A- 4 580 135**

(73) Proprietor: **International Business Machines Corporation**
**Old Orchard Road**
**Armonk, N.Y. 10504(US)**

(72) Inventor: **Thompson, Stephen Patrick**
**318 Liveoak Lane**
**Boynton Beach Florida 33435(US)**

(74) Representative: **Burt, Roger James, Dr.**
**IBM United Kingdom Limited Intellectual Property Department Hursley Park**
**Winchester Hampshire SO21 2JN(GB)**

## Description

This invention relates to computers, such as personal computers, employing video subsystems and more particularly to a more efficient arrangement of this nature having improved performance in relation to the control of arbitration and access to the memory of a subsystem of this nature.

The invention is described herein in connection with a personal computer system. Systems of this nature have been described heretofore which include a microprocessor interconnected with various Input/Output (I/O) and storage elements by way of. A personal computer may also include I/O slots for insertion of adapter cards by the user.

For example, the U.S. patent US-A-4,408,200 describes a personal computer system comprising apparatus and method for writing text characters for a raster scan video display operated in an all-points-addressable, or graphics, mode, and for thereafter reading characters. A processor writes a character to the display by selecting and loading into a graphics video display buffer a text character dot pattern retrieved from storage, and reads a character previously written by comparing a dot pattern retrieved from the display buffer with dot patterns retrieved from main storage. Provision is made for colour display as well. The system illustrates a display or graphics adapter comprising a video subsystem, the adapter being inserted in an I/O slot.

An enhanced video subsystem is described in U.S. patent US-A-4,580,135 having a raster scan display that includes a plurality of storage maps. The maps are addressable in either of two modes to provide addresses and display of video information by the system. The system represents an enhanced graphics system organisation, sometimes referred to as an Enhanced Graphics Adapter (EGA). The video memory is time shared by multiplexing access of a CPU and a CRT controller. Although specific cycle details are not set forth, the Enhanced Graphics Adapter (EGA) Card provides dedicated cycles for accessing the memory by both the CRT controller and the CPU. The EGA has two arbitration modes, a speed mode and a high speed mode. In the high speed mode, the CPU always has 1 cycle out of every 5 cycles in which it can access the video memory; in the low speed mode, the CPU has 3 out of 5 cycles to access the video memory.

Other art especially concerns arbitration in video subsystems. For example, the U.S. patent US-A-4,511,965 concerns a system for resolving the contention between the central processing unit (CPU) and a cathode ray tube (CRT) controller in accessing a video memory array, or video random access memory (RAM), of a data processing system. A CPU access period is provided between successive CRT controller access periods. Arbitration logic is included to provide CRT controller access priority when there is contention between the CPU and the CRT controller. No mention is made of adapting the arbitration scheme to the CRT controller's activity.

As another example, U.S. patent US-A-4,117,469 describes a computer terminal having a CRT display, a microprocessor, and a random access memory which stores character codes for information to be displayed on the CRT screen and which serves as working storage for the processor. The display processing is interleaved with other chores of the microprocessor.

As still another example, U.S. patent US-A-4,577,344 discloses a system for processing video signals representing sensed images. The video signals are fed through a multiplexer to a vision processor and a display. The video signals are preprocessed and stored in the vision processor which has a shared memory. A computer controller has access to the shared memory via a common bus and controls operation of the vision processor in response to command signals from peripheral devices.

A primary objective of the present invention is to enable more efficient and rapid utilisation of a video memory in a video subsystem by a video controller and central processing unit.

According to the invention, there is provided a computer system including a video subsystem for controlling the display of data on a cathode ray tube display device, a CPU (2) for controlling operation of the system and operable to access a video memory (13) for the transfer of CRT data between the memory and the CPU, and a video controller (10) operable to access the video memory to retrieve CRT data therefrom for displaying, characterised by:

video arbitration means (22 to 28) for arbitrating the access of said CPU and said video controller to said video memory and operable to enable access of said video controller to said video memory on a request/acknowledge basis whereby said CPU is enabled to access said video memory both during CRT display cycles when the CRT is inactive and during non-display cycles.

An embodiment of the invention will now be described, by way of example, with reference to the accompanying drawings, in which:

Fig. 1A is a generalised system block diagram of the video memory subsystem and arbitration apparatus described herein;

Fig. 1B shows inter-relationship of various elements of the video subsystem of Fig. 1A with cross reference to other figures in the drawings;

Fig. 1C is a more detailed block diagram of the video memory subsystem and arbitration apparatus of Fig. 1A;

Fig. 2 shows the arbitration and memory cycle generation while Fig. 3 shows CPU interface and data latch control logic;

Fig. 4 illustrates the logical construction of the memory cycle generator of the video subsystem;

Fig. 5 illustrates the logical construction of the high speed arbiter;

Fig. 6 illustrates the logical construction of the clock generator;

Figs. 7A, 7B, and 7C illustrate waveforms for timings of 8 dot mode, 9 dot mode with 8 dot memory cycle and 9 dot mode with 7 dot memory cycle respectively;

Figs. 8A and 8B show waveforms occurring during high speed arbiter cycles for CPU Read and CPU Write, respectively; and

Figs. 9A and 9B are waveform diagrams of low speed arbiter cycles for CPU Read and CPU Write respectively.

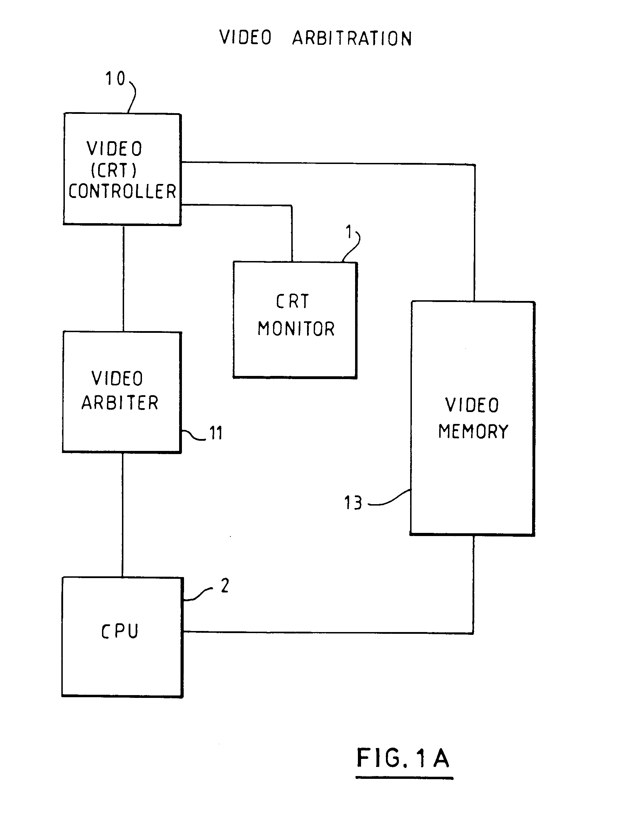

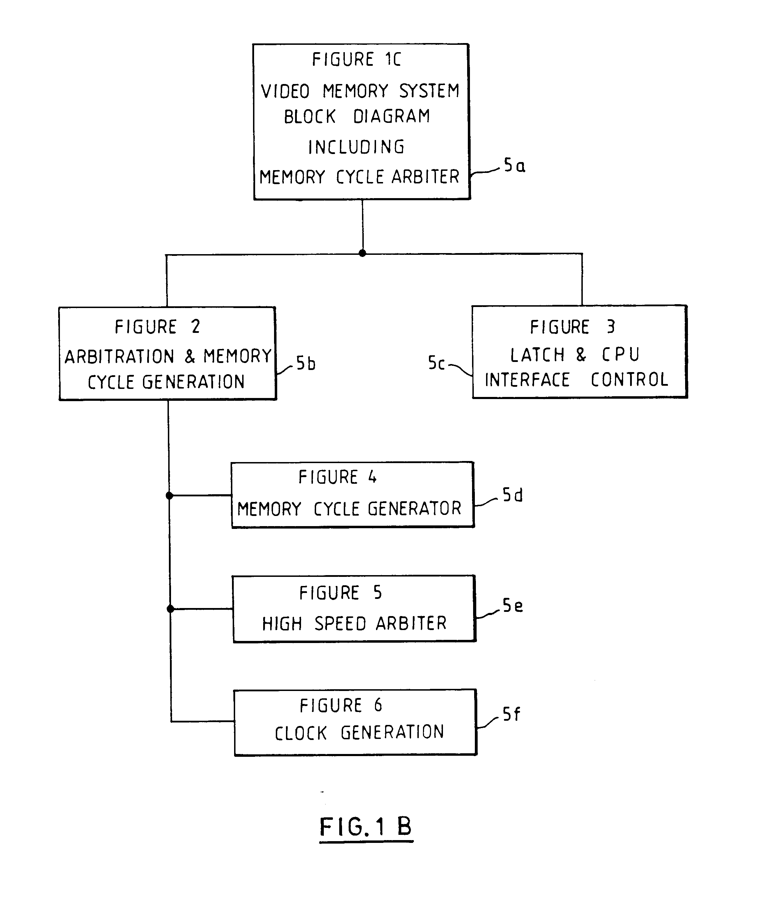

Fig. 1A illustrates the video memory subsystem and includes video memory 13 that stores the data for display on a CRT monitor 1. The video memory 13 is accessed by CPU 2 for writing and updating of the data and for reading the data on occasion, and is also accessible by video or CRT controller 10 for use in controlling the actual display on the monitor 1. Access of video memory 13 by CPU 2 and video controller 10 is controlled on a cyclical multiplexed basis by video (memory cycle) arbiter 11.

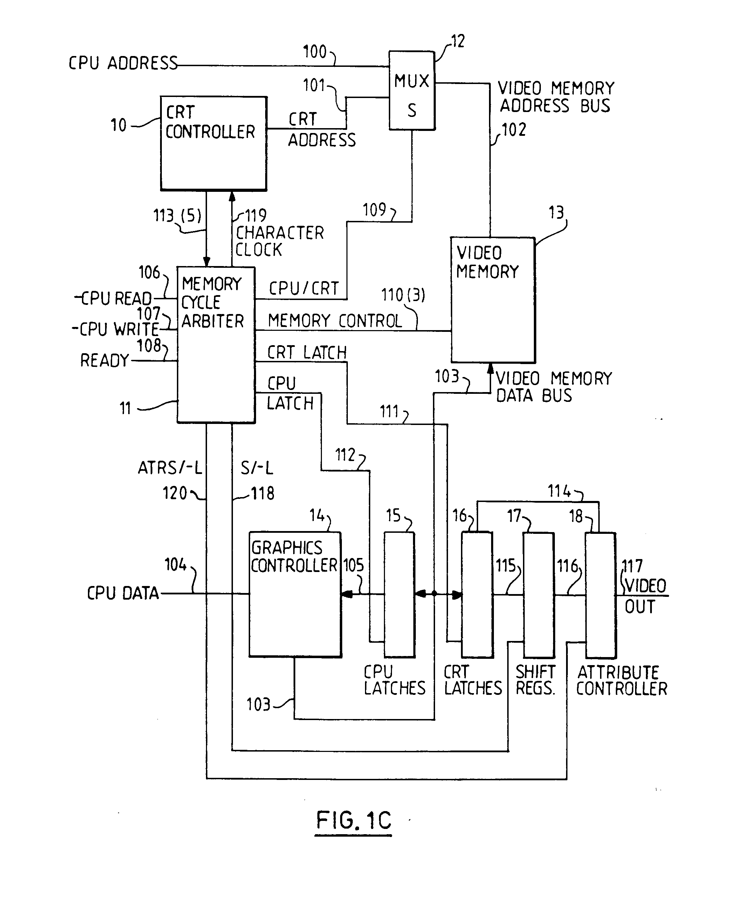

Fig. 1B is arranged to show the inter-relationship of the elements comprising the video subsystem with cross-reference to the other figures in the drawings. Included are blocks 5a - 5f which represent Fig. 1C, and 2 - 6, respectively.

Fig. 1C shows the video memory subsystem which includes a memory cycle arbiter 11. The memory cycle arbiter 11 provides control signals on lines 110 to the video memory 13, address selection control to multiplexor (MUX) 12 by the CPU/CRT signal on line 109, and data latch control by a CRT latch signal on line 111 and CPU LATCH signal on line 112. The -CPU READ signal on line 106 and -CPU WRITE signal on line 107 come from the CPU 2 and tell the video (memory cycle) arbiter 11 that the CPU wants to initiate a video memory 13 read or write operation. Arbiter 11 uses the READY signal on line 108 to tell the CPU when the requested cycle is completed.

When the CPU reads video memory 13, the CPU address signal on line is coupled to the video memory address bus 102 via MUX 12. The CPU/CRT signal on line 109 selects which address input, CPU address 100 or CRT address 101, is presented on address bus 102. The video memory data on bus 103 is latched in the CPU latches 15 by CPU LATCH signal on line 112 and sent to the CPU via data bus 105, graphic controller 14, and CPU data bus 104. When the CPU writes to video memory 13, the CPU address signal on line 100 is coupled to the video memory address bus 102 via MUX 12. Write data from the CPU is sent to video memory 13 via CPU data bus 104, graphics controller 14, and data bus 103.

The CRT controller 10 generates the CRT screen address signal on line 101 which is sent via MUX 12 to address the video memory 13. CRT screen refresh data goes to the CRT latches 16 via data bus 103 and is latched by the CRT LATCH signal on line 111. Screen data in the CRT latches is sent to the attribute controller 18 via data bus 114; or via bus 115, shift registers 17, and bus 116. The attribute controller 18 formats the CRT data and sends it to the video display monitor via bus 117.

The video (memory cycle) arbiter 11 decides whether the CRT controller 10 or the CPU 2 gets to use the video memory 13 at any given time. The CRT controller 10 needs to access the video memory 13 constantly during active video intervals to maintain the video image on the video display monitor. The data rate required to maintain the video image during active video intervals is determined by the operating mode of the video subsystem.

The video subsystem is capable of operating in many different modes, including alpha-numeric and graphics modes of several character or pixel resolutions. For example, the video subsystem can display 640 pixels horizontal by 200 lines vertical and 16 colour graphics, and 640 pixels horizontal by 200 lines vertical and 2 colour graphics. These constitute two of the many operating modes of the video subsystem and have different screen data rate requirements.

The memory cycle arbiter 11 senses the screen data rate required, and adjusts the memory cycle arbitration accordingly. The memory cycle arbiter 11 also adjusts the arbitration during times when the horizontal and vertical display enable signals are inactive to give the CPU all available cycles (except for memory refresh cycles) of video memory 13. Changing the arbitration during the non-display periods as well as during the retrace intervals instead of just during the retrace intervals alone as in the prior art allows for greater video memory 13 bandwidth to the CPU since the retrace intervals fall within the non-display intervals.

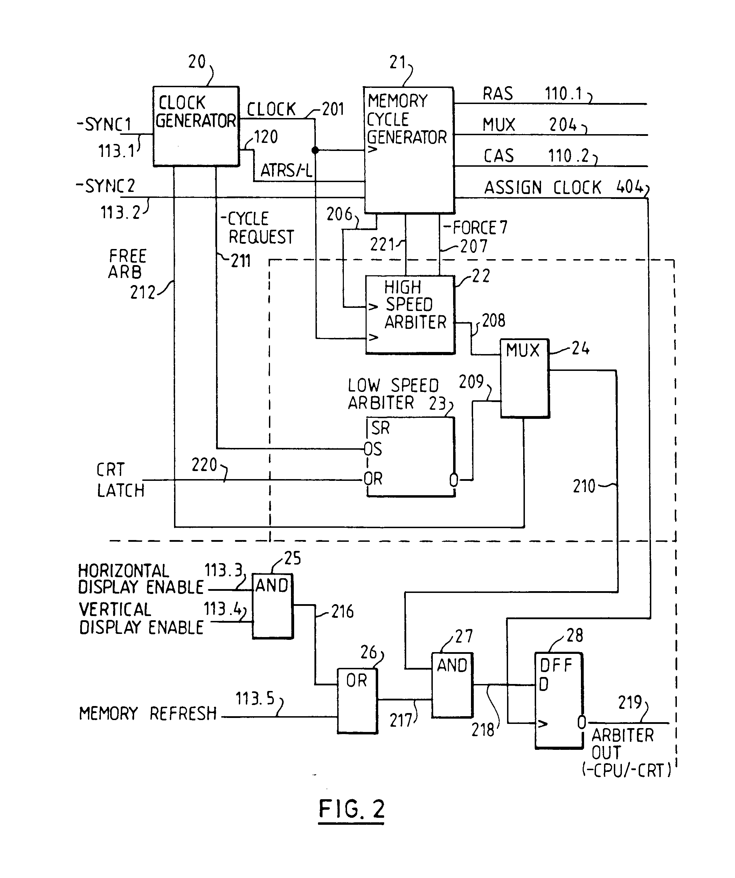

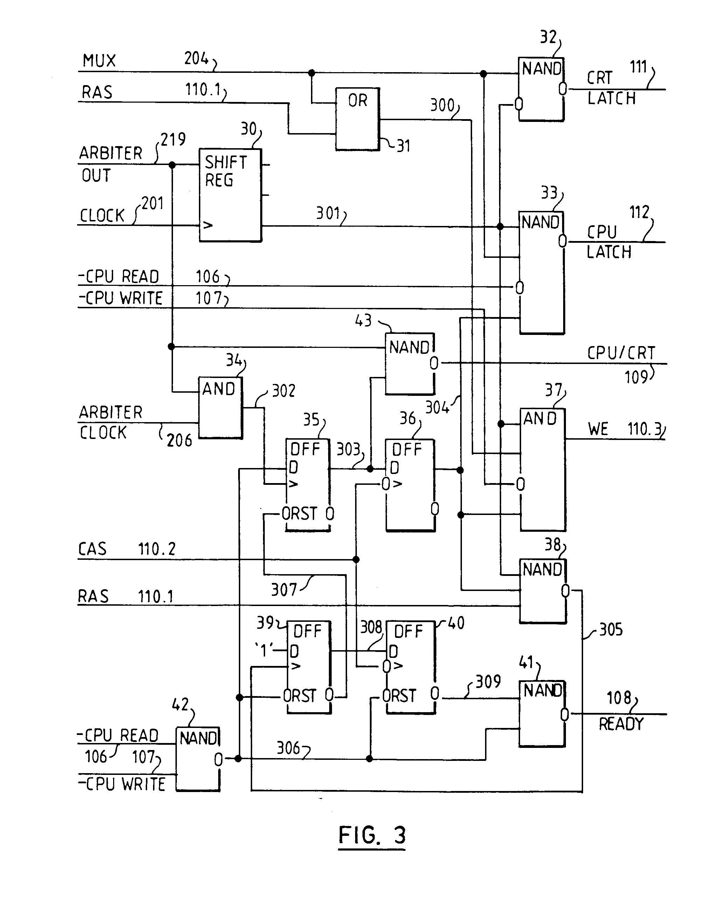

Figs. 2 and 3 form a more detailed block diagram of the memory cycle arbiter 11. Fig. 2 shows the arbitration and memory cycle generation logic, while Fig. 3 shows the CPU interface and data latch control logic. Referring to Fig. 2, the VGA arbiter consists of two main sections 3 and 4. The first is the 'Active Screen Time Arbiter' (ASTA) which makes memory cycle assignments based on the active display requirements. Blocks 22, 23, and 24, in Fig. 2 comprise this section. Block 22 is the high speed arbiter which is a fixed rate assignment type arbiter used in video modes which require high screen data rates. Block 23 is the low speed arbiter which is a simple SR latch that forms a request/acknowledge type arbiter. Block 24 is the multiplexer that selects which arbiter is used to make the memory cycle assignments. The MUX is controlled by a select signal generated by logic that monitors the video operating mode to determine whether high or low speed arbitration is appropriate.

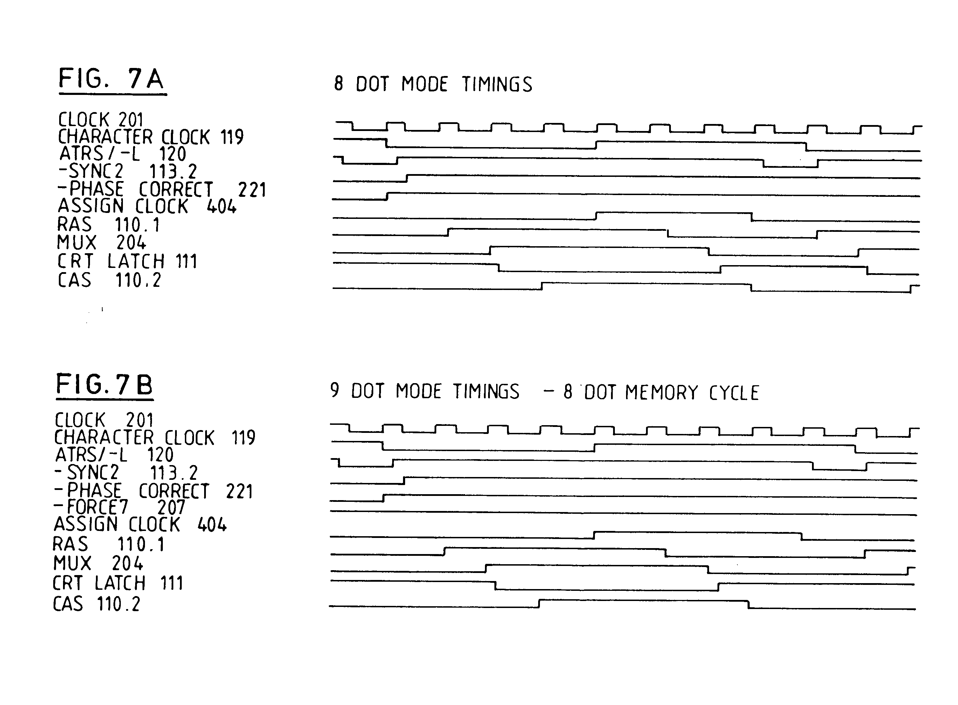

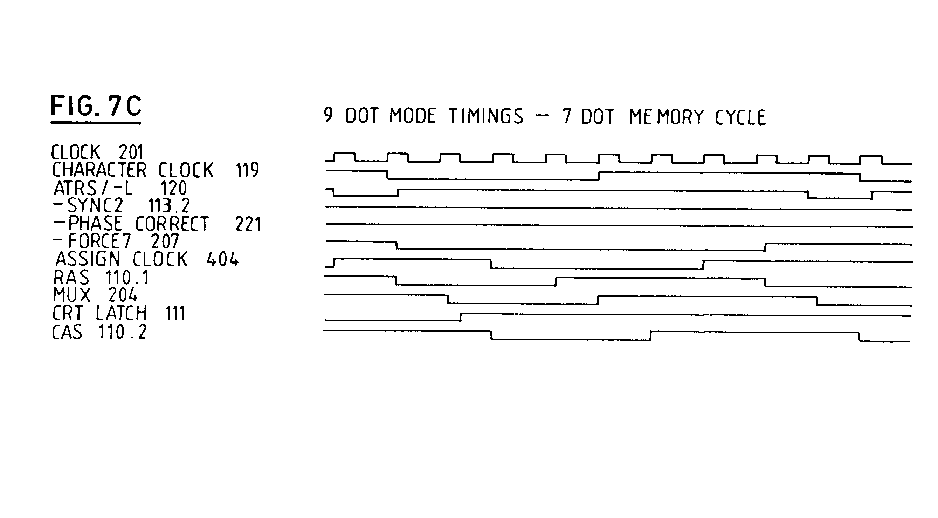

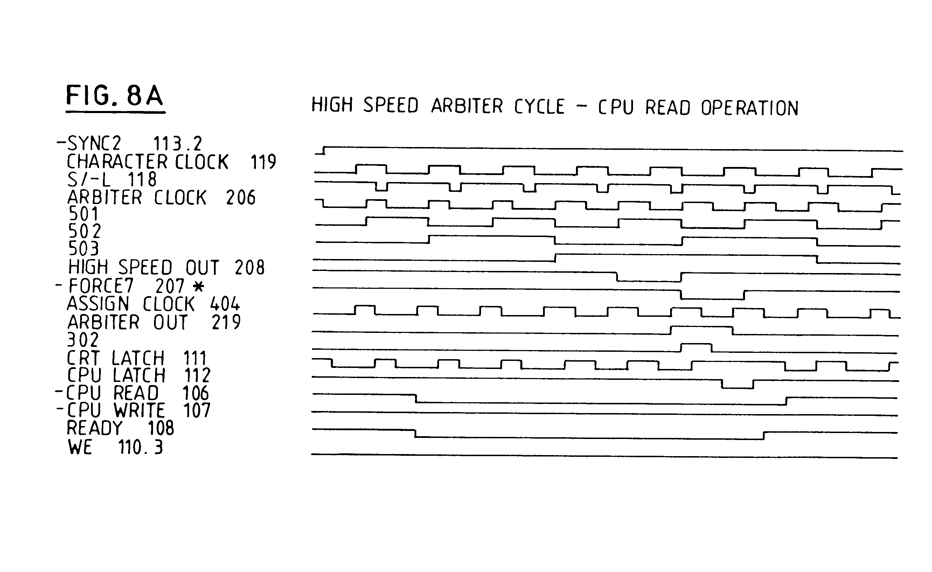

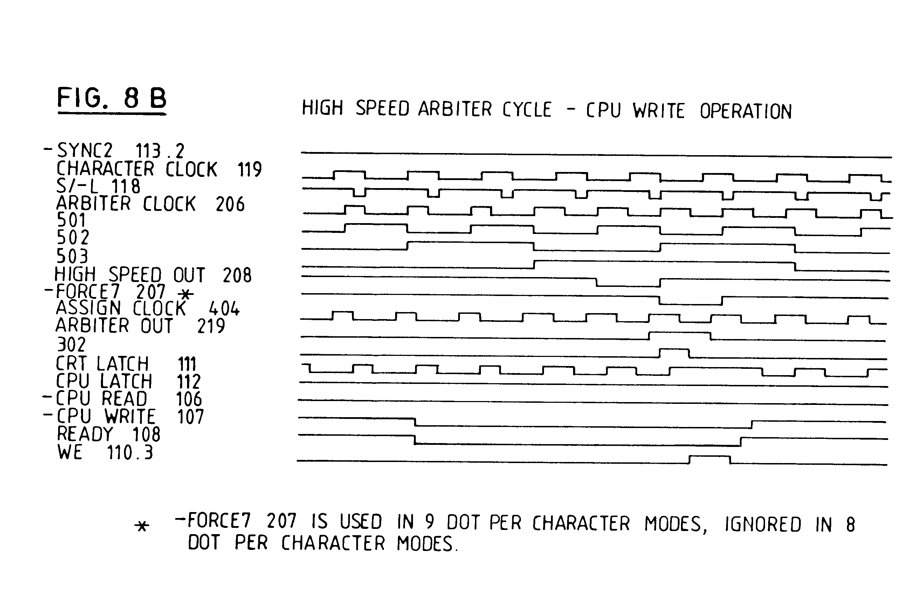

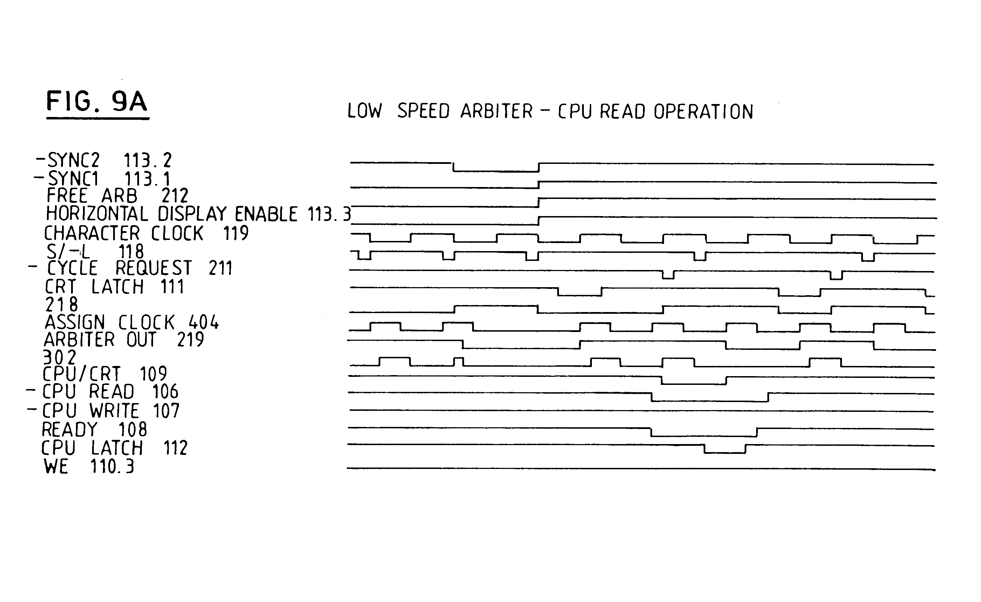

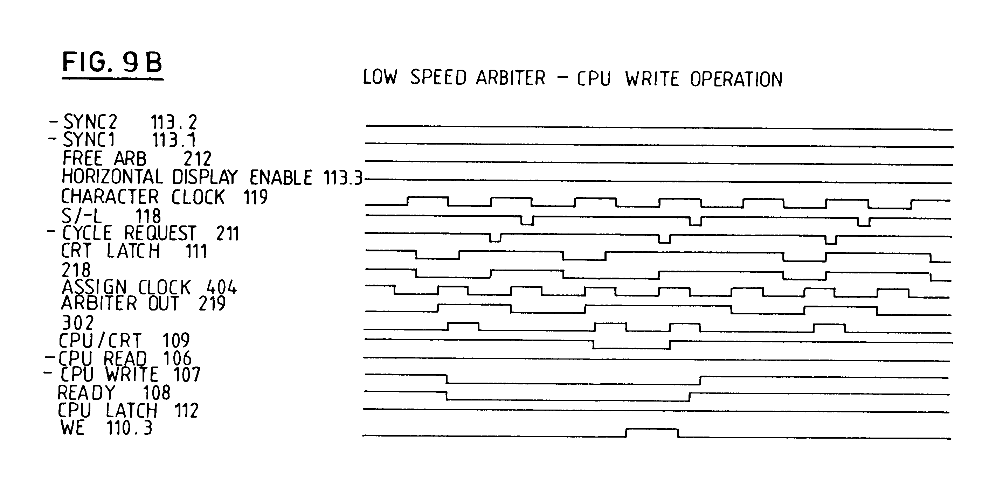

The output of the ASTA is fed to the 'Active/Inactive Screen Time Arbiter' (AISTA). This section monitors the horizontal and vertical display interval, block 25. If the screen is active, or if memory refresh is taking place, block 26, then the output of the ASTA is passed by block 27 to the memory cycle assignment latch, block 28. Otherwise, the next memory cycle is earmarked for the CPU. Many of the signal waveforms and timing relationships are shown in Fig. 7A, 7B and 7C. Reference is also made to Figs. 8A and 8B which illustrate signal waveforms and timing relationships during high speed arbiter cycles (high speed mode) for CPU Read and CPU Write respectively. Other signal waveforms of interest for low speed mode are shown in Fig. 9A, CPU Read operation and Fig. 9B, CPU Write operation.

The ARBITER OUT signal on line 219, Fig. 2, is generated by a D type flip-flop 28 clocked by an ASSIGN CLOCK signal on line 404. The data input of DFF 28 is the NEXT ARB STATE signal on line 218. The NEXT ARB STATE signal on line 218 will reflect the ACTIVE SCREEN ARB OUT signal on line 210 if the HORIZONTAL DISPLAY ENABLE signal on line 113.3 and the VERTICAL DISPLAY ENABLE signal on line 113.4 are active, or if MEMORY REFRESH signal on line 113.5 is active. AND circuit 25, OR circuit 26, and AND circuit 27 perform this function. The HORIZONTAL DISPLAY ENABLE signal on line 113.3 and the VERTICAL DISPLAY ENABLE signal on line 113.4 are customarily furnished in an adapter such as the aforementioned Enhanced Graphics Adapter. The MEMORY REFRESH signal on line 113.5 is the same frequency as HORIZONTAL DISPLAY ENABLE 11.3 and is a positive logic pulse 3 or 5 character times long, occurring 1 character time after HORIZONTAL DISPLAY ENABLE 113.3 goes from logical one to logical zero. The ACTIVE SCREEN ARB OUT signal on line 210 is used when the CRT screen is in an active display interval. ACTIVE SCREEN ARB OUT signal on line 210 will reflect the high speed arbiter 22 output 208, or the low speed arbiter 23 output 209, depending on the status of multiplexer 24 control FREE ARB signal on line 212 from clock generator 20. Clock generator 20 senses the data rate requirements of the selected video mode and automatically determines whether high speed arbiter 22 or low speed arbiter 23 is appropriate for memory cycle assignment.

The low speed arbiter 23 is a simple Set-Reset (S-R) latch that operates as a request-acknowledge type arbiter. The request, or S input is the -CYCLE REQUEST signal on line 211 generated by clock generator 20. The acknowledge, or R input is the CRT LATCH signal on line 220. The CRT LATCH signal on line 220 is used in Fig. 1C as a data latch strobe that latches the video memory 13 data.

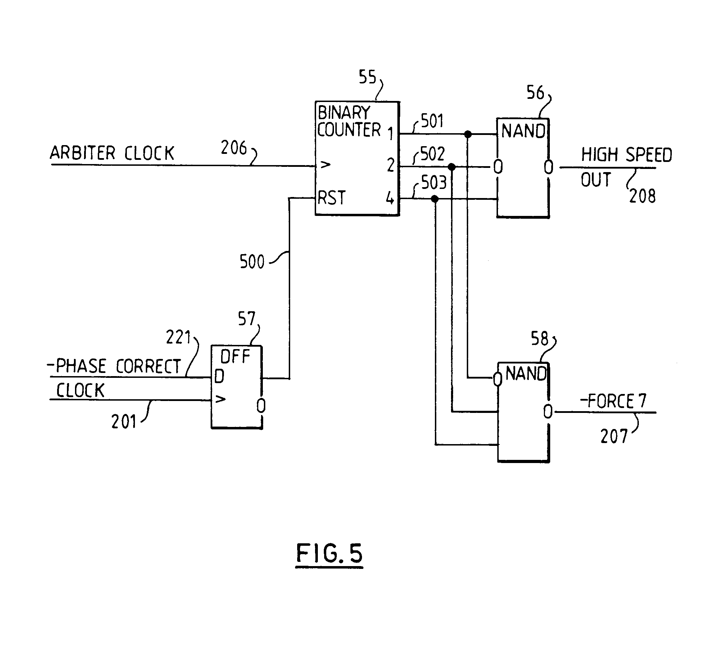

The high speed arbiter 22 is an assignment type arbiter whose logical construction is shown in Fig. 5. In Fig. 5, high speed arbiter 22 consists of binary counter 55, D flip-flop 57, and NAND gates 56 and 58. ARBITER CLOCK signal on line 206 is generated by memory cycle generator 21 and is used to clock binary counter 55. NAND gate 56 generates the high speed arbiter 22 output signal on line 208. NAND gate 56 drives the HIGH SPEED OUT 208 signal to logical zero (CPU cycle) each time the binary count in counter 55 is equal to five. NAND gate 58 drives the -FORCE7 signal on line 207 low whenever the binary count in counter 55 is equal to six. The -FORCE7 signal on line 207 is used to re-synchronise memory cycle generator 21 after every 8th memory cycle in video modes that use 9 input clock periods for each character position on the screen, as in Figs. 7B and 7C. In video modes that use 8 input clock periods for each character, as in Fig. 7A, this signal is ignored. The D flip-flop (DFF) 57 is used to provide noise immunity for the PHASE CORRECT signal on line 221 that synchronises the binary counter to the start of a horizontal scan line.

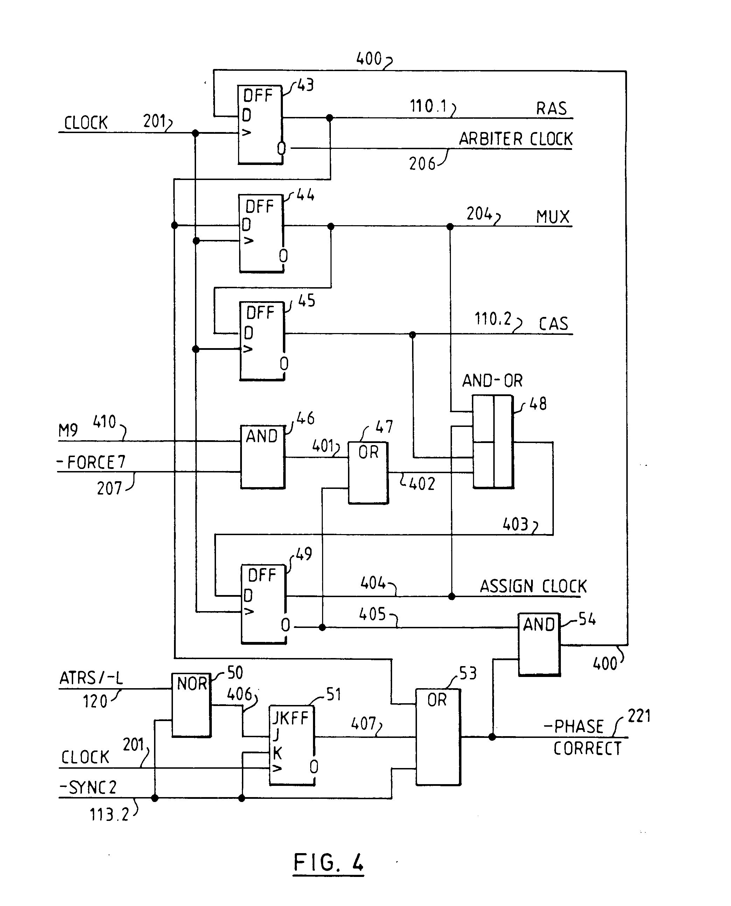

Referring again to Fig. 2, memory cycle generator 21 generates the control signals for video memory 13 as well as clocks for high speed arbiter 22 and arbiter output flip-flop (DFF) 28. Fig. 4 illustrates the logical construction of memory cycle generator 21. D flip-flops (DFF) 43, 44, 45, and 49 make up a shift register whose output is fed back to its input via line 400. The RAS signal on line 110.1, MUX signal on line 204, and CAS signal on line 110.2 are active high pulses that are shifted in phase by one input clock period each. RAS signal on line 110.1 and CAS signal on line 110.2 are provided via the MEMORY CONTROL bus 110 of Fig. 1. The AND-OR block 48 is used to force the shift register feedback cycle to seven (7) input clocks by selecting the third flip-flop stage (DFF 45) output during the first half of the feedback cycle, and by selecting the second flip-flop stage (DFF 44) during the second half of the feedback cycle. The AND circuit 46 and OR circuit 47 are used to force the feedback cycle to 8 input clocks during modes that use 9 clock periods for a single character position on the CRT screen. The M9 signal on line 410 is a single bit output of a software programmable register that tells the video hardware to make the character box 9 clocks long. The -FORCE7 signal on line 207 is generated by high speed arbiter 22 and forces one 7 clock feedback cycle once every 8 feedback cycles. This is done to realign the generated memory cycles and high speed arbiter 22 with the S/-L signal on line 118, Fig. 1C, that controls the video output shift registers 17.

The -PHASE CORRECT signal on line 221 is used to synchronise the memory cycle generation logic and high speed arbiter 22 to the beginning of a horizontal scan line on the CRT screen. AND circuit 54 allows the -PHASE CORRECT signal on line 221 to prevent the memory cycle shift register from starting a new cycle by interrupting the feedback loop on line 400. The memory cycle shift register is idle (all DFF's reset) while the -PHASE CORRECT signal on line 221 is active. The -SYNC2 signal on line 113.2 is generated by the CRT controller 10, Fig. 1C, and indicates the character position just prior to the start of the horizontal scan line. The ATRS/-L signal on line 120 is a signal used to control data within attribute controller 18, Fig. 1C. The timing of -PHASE CORRECT signal on line 221 is precisely controlled by NOR circuit 50, JK flip-flop 51, and OR circuit 53; and is a derivative of the ATRS/-L signal on line 120 and -SYNC2 signal on line 113.2. Precise phase control of the -PHASE CORRECT signal on line 221 provides immunity to signal propagation delay variations from chip to chip which are inherent in the IC manufacturing process.

The initial state of the control logic with -SYNC2 signal on line 113.2 high will be JK flip-flop 51 reset (signal on line 407 low) and -PHASE CORRECT signal on line 221 high. When -SYNC2 signal on line 113.2 goes low, OR circuit 53 drives -PHASE CORRECT signal on line 221 low when the memory cycle shift register enters the second half cycle of operation (as indicated by RAS signal on line 110.1 being low). With -PHASE CORRECT signal on line 221 active, the memory cycle shift register is free to finish the current memory cycle, but is not allowed to begin another one. The circuit will remain in this state until the ATRS/-L signal on line 120 signal goes low, signifying along with -SYNC2 signal on line 113.2 being low that the CRT horizontal scan line will begin with the next clock cycle. At this point NOR circuit 50 output 406 goes high and JK flip-flop 51 output 407 will go high at the next CLOCK signal on line 201, forcing -PHASE CORRECT signal on line 221 inactive. The circuit will remain in this state until -SYNC2 signal on line 113.2 goes high, holding -PHASE CORRECT signal on line 221 inactive and resetting JK flip-flop 51.

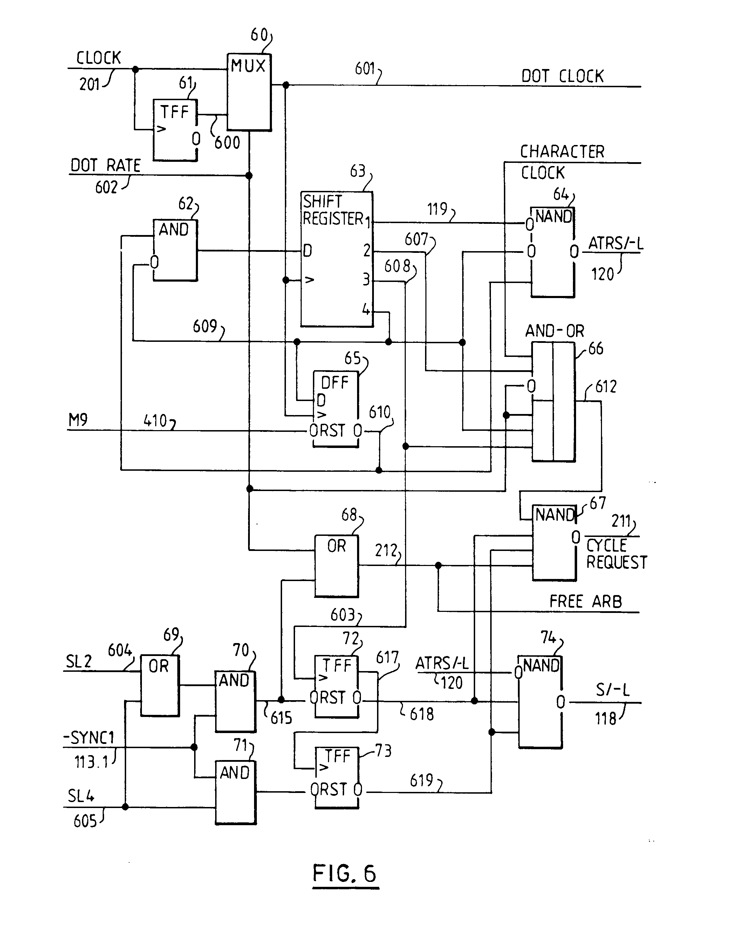

The internal operation of clock generator 20 is shown in Fig. 6. A master clock signal on line 201 drives toggle flip-flop (TFF) 61 and one of the inputs to MUX block 60. Toggle flip-flop 61 divides the master clock 201 frequency by 2 and presents the result to the other input of MUX 60 via line 600. The DOT RATE signal on line 602 signal is a single bit output of a software programmable register that tells the clock generator what clock frequency to use for the video dot rate.

The output of MUX block 60 becomes the DOT CLOCK signal on line 601. DOT CLOCK signal on line 601 is used as the clock for a shift register circuit made up of shift register block 63 and D flip-flop (DFF) 65. This shift register operates in the same manner as the shift register in memory cycle generator 21, Fig. 4. The AND circuit 62 provides the feedback for the shift register loop. The shift register will have an 8 or 9 DOT CLOCK cycle length on line 601 depending on the state of the M9 signal on line 410. When M9 on line 410 is logical 1 (9 dot mode selected), D flip-flop 65 inserts an extra DOT CLOCK period via line 601 during the second half of the shift register feedback cycle. The -CHARACTER CLOCK signal on line 119 is the clock used to clock the CRT controller 10 of Fig. 1C. Signals on lines 607, 608, 609, and 610 (in 9 dot modes) will all look like -CHARACTER CLOCK signals on line 119, but will be phase shifted by one DOT CLOCK (line 601) period each.

The ATRS/-L signal on line 120 is used by the Attribute controller 18 in Fig. 1C and is generated by NAND block 64. The -CHARACTER CLOCK signal on line 119, and signals 609 and 610 are the inputs to NAND block 64. The timing of ATRS/-L signal on line 120 is shown in Fig. 7A, 7B, and 7C. The -CYCLE REQUEST signal on line 211 is used to tell the low speed arbiter 23 that a CRT memory cycle needs to be performed. The -CYCLE REQUEST signal on line 211 is generated by NAND block 67. The output of OR circuit 68 (signal on line 212) serves as an enable for the -CYCLE REQUEST signal. The -CYCLE REQUEST signal on line 211 will be generated if the FREE ARB signal on line 212 signal is active, that is, if DOT CLOCK frequency (line 601) selected is the master CLOCK 201 divided by 2, or if the shift registers 17 in Fig. 1C are programmed in a multiple shift mode of operation as signified by the signal on line 615 being logical 1.

Multiple shift mode means that video memory 13 data need not be strobed into CRT latches 16, Fig. 1C, for every cycle of -CHARACTER CLOCK signal on line 119. Available modes are latching video memory 13 data every 2 or 4 cycles of -CHARACTER CLOCK 119.

Signals on lines 618 and 619 are used in the multiple shift modes as secondary enables that allow -CYCLE REQUEST (line 211) to be activated once ever 2 or 4 cycles of -CHARACTER CLOCK signal on line 119. AND-OR block 66 generates a signal on line 612 which is the final output of NAND block 67. The signal on line 612 is generated once every -CHARACTER CLOCK (line 119) cycle in one of two DOT CLOCK (line 601) positions. Which DOT CLOCK position is used depends on whether the DOT CLOCK frequency is equal to CLOCK signal on line 201 or CLOCK signal on line 201 divided by 2. The DOT RATE signal on line 602 selects which AND portion of AND-OR block 66 is responsible for selecting the DOT CLOCK position.

In modes where DOT CLOCK signal on line 601 is the same frequency as CLOCK signal on line 201, the signal on line 612 is the logical AND of -CHARACTER CLOCK signal on line 119 and the signal on line 607. In modes where DOT CLOCK 601 is half the frequency of CLOCK 201, the signal on line 612 is the logical AND of signals on lines 608 and 609.

The purpose for varying the position of signal 612, and therefore -CYCLE REQUEST on line 211, in the high and low dot rates is to position the arbitered CRT memory cycles such that there are two or more memory cycles available for the CPU between each CRT cycle. This prevents the CRT cycles from bunching up and requiring the CPU to wait longer at any given instant of time for an available memory cycle.

The S/-L signal on line 118 controls the load and shift operation of the video shift registers 17 of Fig. 1C. The S/-L 118 signal on line 118 is generated by NAND block 74 and uses ATRS/-L signal on line 120 as one of its inputs. The other two inputs are signals on lines 618 and 619 which serve as enables that allow S/-L signals on line 118 to happen as ATRS/-L signals on line 120 once every 1, 2, or 4 -CHARACTER CLOCK 119 cycles. Signals on lines 618 and 619 are generated by toggle flip-flops (TFF) 72 and 73 which are configured as a two bit ripple counter clocked by the signal on line 608. The signal on line 608 is chosen as a clock to allow time for the outputs of the flip-flops to stabilise before ATRS/-L signal on line 120 changes. The OR circuit 69, AND circuit 70, and AND circuit 71 are used to control the operation of the flip-flops. With -SYNC1 signal on line 113.1 low, the flip-flops are held reset and the S/-L signal on line 118 looks identical to the ATRS/-L signal on line 120. The -SYNC1 signal on line 113.1 is generated by CRT controller 10 in Fig. 1C and synchronises the two bit counter to the start of a horizontal scan line on the display monitor. -SYNC1 113.1 is similar to the HORIZONTAL DISPLAY ENABLE signal on line 113.3. When -SYNC1 signal on line 113.1 is high, SL2 signal on line 604 and SL4 signal on line 605 control flip-flops 72 and 73. The SL2 signal on line 604 and SL4 signal on line 605 are single bit outputs of a software programmable register. If the SL2 signal on line 604 is logical one, then flip-flop 72 is allowed to toggle with the signal on line 608, causing S/-L signal on line 118 to occur once every two of the -CHARACTER CLOCK signals on line 119. If the SL4 signal on line 605 is logical one then flip-flops 72 and 73 are both allowed to toggle, causing the S/-L signal on line 118 to occur once every four -CHARACTER CLOCK cycles (line 119).

Fig. 3 shows the logic that makes up the latch interface control section of the memory cycle arbiter 11. The signal CRT LATCH on line 111 is generated by NAND block 32 which has inputs MUX on line 204 and a signal on line 301 which is the output of shift register 30. The MUX signal on line 204 controls the shape and timing of CRT LATCH signal on line 111, while the signal on line 301 is an enable signal that is derived from the ARBITER OUT signal on line 219 delayed by three CLOCK (line 201) periods. In a similar manner, CPU LATCH signal on line 112 is generated by NAND block 33. The inputs of NAND 33 are fed by MUX signal on line 204 and the signal on line 301, as well as -CPU READ signal on line 106 and the signal on line 304. The -CPU READ signal on line 106 is a control signal from the CPU 2 that indicates the CPU 2 wants to read video memory 13. The signal on line 304 is the output of D flip-flop 36 and indicates that the current video memory 13 cycle is actually being used by the CPU. CPU/CRT signal on line 109, used in Fig. 1C to control MUX block 12, is generated by NAND block 43.

If the current memory cycle is arbited to the CPU (ARBITER OUT on line 219 high) and if the CPU is actually using the cycle (signal on line 303 high) then CPU/CRT signal on line 109 will be low selecting the CPU address input of MUX block 12. The WE signal on line 110.3 is a control signal to video memory 13 that indicates a Write operation. The WE signal on line 110.3 is generated by AND circuit 37 which has as inputs a signal on line 304, -CPU WRITE signal on line 107, and the signal on line 301 all of which are enable signals, and a signal on line 300 which controls the shape and timing of the WE signal on line 110.3. Signals on lines 301 and 304 are as described above, while -CPU WRITE signal on line 107 is a control signal from the CPU that indicates that the CPU wants to write to video memory 13. The signal on line 300 is the logical OR of MUX signal on line 110.3 as seen by video memory 13 will go active at RAS signal on line 110.1 time, and inactive one CLOCK (line 201) cycle before CAS signal on line 110.2 goes inactive. This timing for WE signal on line 110.3 meets a video memory 13 dynamic RAM specification for an early write cycle.

READY signal on line 108 is generated by NAND block 41 as follows. In the inactive state where -CPU READ signal on line 106 and -CPU WRITE signal on line 107 are inactive (high), NAND block 42 drives the signal on line 306 low, resetting D flip flops 39 and 40, and holding READY signal on line 108 active (high). When the CPU requests a video memory 13 cycle by activating -CPU READ signal on line 106 or -CPU WRITE signal on line 107, the signal on line 306 will go high and READY signal on line 108 will go inactive (low). The CPU will maintain the current states of -CPU READ signal on line 106 and -CPU WRITE signal on line 107 until after READY signal on line 108 goes high again. The logical 1 state of the signal 306 will be latched into D flip-flop 35 by the signal on line 302 which is the AND of ARBITER OUT signal on line 219 and ARBITER CLOCK signal on line 206. The AND circuit 34 performs this function. The signal on line 302 is a clock that occurs when the next video memory 13 cycle is available to the CPU. The output of D flip-flop 35 is presented as data to D flip-flop 36. The trailing edge of CAS signal on line 110.2 indicates the end of the current video memory 13 cycle and is used to strobe this data into D flip-flop 36, forming the signal on line 304, which when high indicates that the new current video memory 13 cycle is being used by the CPU. The NAND block 38 uses signals on lines 304 and 301 to enable RAS signal on line 110.1 as a clock to D flip-flop 39. The trailing edge of RAS signal on line 110.1 of the CPU video memory 13 cycle latches a logical 1 into D flip-flop 39. The signal on line 307 goes low resetting D flip-flop 35 and signal 308 goes high. The trailing edge of CAS 110.2 clocks the high state of signal 308 into D flip-flop 40, driving signal 309 low, and READY signal on line 108 high indicating to the CPU that the video memory 13 cycle is completed. The trailing edge of CAS signal on line 110.2 will also clock the low state of D flip-flop 35 output into D flip-flop 36 thereby driving the signal on line 304 low. The circuit will remain in this state until -CPU READ signal on line 106 or -CPU WRITE signal on line 107 are both high again. At this point NAND block 42 will drive the signal on line 306 low again, resetting D flip-flops 39 and 40, and holding READY signal on line 108 high through NAND 41. The circuit will remain in this state until the CPU again activates -CPU READ signal on line 106 or -CPU WRITE signal on line 107. Thus, the video arbiter monitors the state of screen display and when it is determined that the screen display will not be active, the CPU is enabled to have the cycle or cycles in which the screen display is not active.

## Claims

1. A computer system including a video subsystem for controlling the display of data on a cathode ray tube display device, a CPU (2) for controlling operation of the system and operable to access a video memory (13) for the transfer of CRT data between the memory and the CPU, and a video controller (10) operable to access the video memory to retrieve CRT data therefrom for displaying, characterised by:
   video arbitration means (22 to 28) for arbitrating the access of said CPU and said video controller to said video memory and operable to enable access of said video controller to said video memory on a request/acknowledge basis whereby said CPU is enabled to access said video memory both during CRT display cycles when the CRT is inactive and during non-display cycles.

2. A system according to Claim 1, further characterised in that said display device is operable in a first speed mode and a second, lower, speed mode and said video arbitration means is operable, for the first speed mode, to enable access of the video controller and the CPU to the video memory on a fixed cycle assignment basis whereby the CPU is enabled for such access during assigned CPU cycles and CRT non-display intervals but not during assigned video controller cycles, and is operable, for the second speed mode, to enable access of the video controller to the video memory on said request/acknowledge basis.

3. A system according to Claim 2, further characterised in that said CPU generates control signals for said video arbitration means defining screen data rates to establish said first or said second speed mode.

4. A system according to Claim 2 or Claim 3 further characterised in that said video arbitration means includes a high speed arbiter comprising a counter for establishing fixed cycle assignment of access to said video memory by said video controller and said CPU, a low speed arbiter comprising a latch for establishing said request/acknowledgement enablement, and a multiplexer for selecting said high speed or said low speed arbiter for memory access control.

5. A system according to any of the previous claims further characterised in that said video arbitration means includes logic means for monitoring horizontal and vertical display enable signals for the CRT to determine active or inactive display times to provide a memory assignment signal to the video arbitration menus to enable CPU access to the video memory in the next subsequent memory cycle when the display enable signals indicate an inactive display time.

**Patentansprüche**

1. Rechnersystem, das folgendes aufweist: ein Videountersystem, um die Anzeige von Daten auf einer Anzeigeeinrichtung mit einer Elektronenstrahlröhre zu steuern, eine CPU (2), um das Arbeiten des Systems zu steuern und die betrieben werden kann, um auf einen Videospeicher (13) für die Übertragung von CRT-Daten zwischen dem Speicher und der CPU zuzugreifen, und eine Videosteuereinheit (10), die betrieben werden kann, um auf den Videospeicher zuzugreifen, damit CRT-Daten aus diesem zum Anzeigen wiedergewonnen werden, gekennzeichnet durch:
ein Video-Entscheidungsmittel (22 bis 28), um das Zugreifen durch die CPU und die Videosteuereinheit auf den Videospeicher zu entscheiden und das betrieben werden kann, um das Zugreifen der Videosteuereinheit auf den Videospeicher auf einer Anforderungs/Bestätigungs-Grundlage zu ermöglichen, wodurch für die CPU der Zugriff auf den Videospeicher sowohl während der CRT-Anzeigezyklen, wenn die CRT nicht aktiv ist, als auch während Zyklen für keine Anzeigen freigegeben ist.

2. System nach Anspruch 1, ferner dadurch gekennzeichnet, daß die Anzeigeeinrichtung in einem ersten Geschwindigkeitsmodus und in einem zweiten Modus mit einer kleineren Geschwindigkeit betrieben werden kann und das Videoentscheidungsmittel im ersten Geschwindigkeitsmodus betrieben werden kann, um das Zugreifen durch die Videosteuereinheit und die CPU auf den Videospeicher auf Grundlage einer festen Periodenzuordnung freizugeben, wodurch die CPU für ein solches Zugreifen während zugeordneter CPU-Perioden und CRT-Intervalle für keine Anzeigen freigegben ist, jedoch nicht während zugeordneter Perioden für die Videosteuereinheit und im zweiten Geschwindigkeitsmodus betrieben werden kann, um das Zugreifen durch die Videosteuereinheit auf den Videospeicher auf der Anforderung/Bestätigung-Grundlage freizugeben.

3. System nach Anspruch 2, das ferner dadurch gekennzeichnet ist, daß die CPU Steuersignale für das Videoentscheidungsmittel erzeugt, das Schirmdatenraten definiert, um den ersten oder den zweiten Geschwindigkeitsmodus festzulegen.

4. System nach Anspruch 2 oder Anspruch 3, das ferner dadurch gekennzeichnet ist, daß das Videoentscheidungsmittel folgendes aufweist: eine Entscheidungseinrichtung mit hoher Geschwindigkeit, das einen Zähler für das Festlegen einer festen Periodenzuordnung des Zugreifens auf den Videospeicher durch die Videosteuereinheit und die CPU aufweist, eine Entscheidungseinrichtung mit niedriger Geschwindigkeit, die folgendes aufweist: ein Latch, um die Freigabe der Anforderung/Bestätigung festzulegen und einen Multiplexer, um die Entscheidungseinrichtung für eine Speicherzugriffsteuerung mit hoher Geschwindigkeit oder mit niedriger Geschwindigkeit auszuwählen.

5. System nach irgendeinem der vorgehenden Ansprüche ferner dadurch gekennzeichnet, daß das Videoentscheidungsmittel Logikmittel enthält, um horizontale und vertikale Anzeigefreigabesignale für die CRT zu überwachen, wobei aktive oder inaktive Anzeigezeiten bestimmt werden, um ein Speicherzuordnungssignal an das Videoentscheidungsmittel zu liefern, damit ein CPU-Zugriff auf den Videospeicher im nächstfolgenden Speicherzyklus freigegeben wird, wenn die Anzeigefreigabesignale eine inaktive Anzeigezeit anzeigen.

**Revendications**

1. Système d'ordinateur comprenant un sous-système vidéo pour commander l'affichage de données sur un dispositif de visualisation à tube à rayons cathodiques (CRT), une CPU (unité centrale de traitement) (2) pour commander le fonctionnement du système et actionnable pour accéder à une mémoire vidéo (13) pour le transfert de données de CRT entre la mémoire et la CPU, et une unité de commande de vidéo (1u) manoeuvrable pour accéder à la mémoire vidéo afin d'en extraire les données de CRT pour affichage, caractérisé par :
un moyen d'arbitrage vidéo (22 à 28) pour arbitrer l'accès de ladite CPU et de ladite unité de commande de vidéo à ladite mémoire vidéo et actionnables pour permettre l'accès de ladite unité de commande de vidéo à ladite mémoire vidéo sur une base demande/accusé de réception ce par quoi ladite CPU est validée pour accéder à ladite mémoire vidéo à la fois pendant les cycles d'affichage de CRT quand le CRT est inactif et pendant les cycles de non affichage.

2. Système selon la revendication 1, caractérisé de plus en ce que ledit système d'affichage est actionnable dans un premier mode de vitesse, et dans un second, plus lent, et en ce que ledit moyen d'arbitrage vidéo est actionnable, dans le premier mode de vitesse pour valider l'accès de l'unité de commande de vidéo et de la CPU à la mémoire vidéo sur une base d'affectation à cycle fixe ce par quoi la CPU est validée pour un tel accès pendant des cycles de CPU affectés et des intervalles de non affichage de CRT mais pas pendant les cycles affectés à l'unité de commande de vidéo, et est actionnable, dans le second mode de vitesse, pour valider l'accès de l'unité de commande de vidéo à la mémoire vidéo sur ladite base de demande/accusé de réception.

3. Système selon la revendication 2, caractérisé de plus en ce que ladite CPU produit des signaux de commande pour ledit moyen d'arbitrage vidéo définissant des débits de données sur l'écran afin d'établir ledit premier ou ledit second mode de vitesse.

4. Système selon la revendication 2 ou la revendication 3 caractérisé de plus en ce que ledit moyen d'arbitrage vidéo comprend un arbitre à haute vitesse comportant un compteur pour établir une affectation d'accès à cycle fixe à ladite mémoire vidéo de ladite unité de commande de vidéo et de ladite CPU, un arbitre à vitesse lente qui comprend un verrou pour établir ladite validation de demande/accusé de réception, et un multiplexeur pour sélectionner ledit arbitre à basse ou à haute vitesse pour la commande d'accès à la mémoire.

5. Système selon l'une quelconque des revendications précédentes caractérisé de plus en ce que ledit moyen d'arbitrage vidéo comprend un moyen logique pour piloter les signaux de validation d'affichage horizontal et vertical pour que le CRT détermine les périodes actives ou inactives d'affichage pour procurer un signal d'affectation de mémoire au moyen d'arbitrage vidéo pour valider l'accès de la CPU à la mémoire vidéo dans le cycle de mémoire qui suit immédiatement lorsque des signaux de validation d'affichage indiquent une période d'affichage inactive.

9

VIDEO  ARBITRATION

FIG. 1A

FIGURE 1C

VIDEO MEMORY SYSTEM
BLOCK DIAGRAM

INCLUDING

MEMORY CYCLE ARBITER — 5a

FIGURE 2
ARBITRATION & MEMORY
CYCLE GENERATION — 5b

5c — FIGURE 3
LATCH & CPU
INTERFACE CONTROL

FIGURE 4
MEMORY CYCLE GENERATOR — 5d

FIGURE 5
HIGH SPEED ARBITER — 5e

FIGURE 6
CLOCK GENERATION — 5f

## FIG.1 B

FIG. 1C

FIG. 2

FIG. 3

14

FIG. 4

FIG.5

16

FIG. 6

FIG. 7A

8 DOT MODE TIMINGS

CLOCK 201
CHARACTER CLOCK 119
ATRS/-L 120
-SYNC2 113.2
-PHASE CORRECT 221
ASSIGN CLOCK 404
RAS 110.1
MUX 204
CRT LATCH 111
CAS 110.2

FIG. 7B

9 DOT MODE TIMINGS — 8 DOT MEMORY CYCLE

CLOCK 201
CHARACTER CLOCK 119
ATRS/-L 120
-SYNC2 113.2
-PHASE CORRECT 221
-FORCE7 207
ASSIGN CLOCK 404
RAS 110.1
MUX 204
CRT LATCH 111
CAS 110.2

18

# FIG. 7C

9 DOT MODE TIMINGS — 7 DOT MEMORY CYCLE

CLOCK 201
CHARACTER CLOCK 119
ATRS / -L 120
-SYNC2 113.2
-PHASE CORRECT 221
-FORCE7 207
ASSIGN CLOCK 404
RAS 110.1
MUX 204
CRT LATCH 111
CAS 110.2

EP 0 283 565 B1

# FIG. 8A

HIGH SPEED ARBITER CYCLE — CPU READ OPERATION

-SYNC2      113.2
CHARACTER CLOCK   119
S/-L  118
ARBITER CLOCK  206
501
502
503
HIGH SPEED  OUT  208
- FORCE7   207 *
ASSIGN CLOCK 404
ARBITER  OUT   219
302
CRT  LATCH   111
CPU  LATCH   112
-CPU  READ    106
-CPU  WRITE   107
READY   108
WE   110.3

EP 0 283 565 B1

## FIG. 8 B

HIGH SPEED ARBITER CYCLE – CPU WRITE OPERATION

-SYNC2  113.2
CHARACTER CLOCK  119
S/-L  118
ARBITER CLOCK  206
501
502
503
HIGH SPEED OUT  208
-FORCE7  207 ✱
ASSIGN CLOCK  404
ARBITER OUT  219
302
CRT LATCH  111
CPU LATCH  112
-CPU READ  106
-CPU WRITE  107
READY  108
WE  110.3

✱  -FORCE7  207 IS USED IN 9 DOT PER CHARACTER MODES,  IGNORED IN 8 DOT PER CHARACTER MODES.

EP 0 283 565 B1

## FIG. 9A

LOW SPEED ARBITER – CPU READ OPERATION

-SYNC2 113.2
-SYNC1 113.1
FREE ARB 212
HORIZONTAL DISPLAY ENABLE 113.3
CHARACTER CLOCK 119
S/-L 118
- CYCLE REQUEST 211
CRT LATCH 111
218
ASSIGN CLOCK 404
ARBITER OUT 219
302
CPU/CRT 109
- CPU READ 106
- CPU WRITE 107
READY 108
CPU LATCH 112
WE 110.3

EP 0 283 565 B1

# FIG. 9 B

LOW SPEED ARBITER — CPU WRITE OPERATION

- SYNC2 113.2
- SYNC1 113.1
  FREE ARB 212
  HORIZONTAL DISPLAY ENABLE 113.3
  CHARACTER CLOCK 119
  S/-L 118
- CYCLE REQUEST 211
  CRT LATCH 111
  218
  ASSIGN CLOCK 404
  ARBITER OUT 219
  302
  CPU/CRT 109
- CPU READ 106
- CPU WRITE 107
  READY 108
  CPU LATCH 112
  WE 110.3

EP 0 283 565 B1